# EUROPEAN PATENT APPLICATION

(11) **EP 4 273 427 A1**
(43) Date of publication of application: **08.11.2023**
(21) Application number: 21915933.2
(22) Date of filing: 15.12.2021
(51) Int. Cl.: F16K 17/40, F16K 17/38, G21C 15/24

(54) **WATER SUPPLY VALVE**

(30) Priority: 29.12.2020 RU 2020143782
(71) Applicant: Joint Stock Company "Atomenergoproekt", Moscow, 107996 (RU); Science and Innovations - Nuclear Industry Scientific Development, Private Enterprise, Moscow, 119017 (RU)
(72) Inventor: SIDOROV, Aleksandr Stalevich, Moscow, 115612 (RU); SIDOROVA, Nadezhda Vasilievna, Moscow, 115612 (RU); CHIKAN, Kristin Aleksandrovich, Moscow, 111116 (RU); NEDOREZOV, Andrej Borisovich, g. Podolsk, 142100 (RU)
(74) Representative: Osmans, Voldemars
(86) International application number: PCT/RU2021/000574
(87) International publication number: WO 2022/146183

(57) **Abstract**

A water supply valve comprises an actuating sleeve inserted in an intermediate sleeve and bearing on said intermediate sleeve by means of flanged stops, an actuating rod with a piston, said actuating rod being mounted inside the actuating sleeve and the intermediate sleeve so that the actuating rod bears, via the piston, on a thermomechanical element which bears, via a pressure mechanism, on a protective membrane fastened in the end of the actuating sleeve, an actuating spring mounted on the actuating rod so that one end of the spring bears on the piston and the other end bears on the flanged stops of the actuating sleeve, a rolling bearing mounted on the end of the actuating rod which projects from the actuating sleeve, a flanged cylinder in which is inserted a flanged sleeve with a rod-type sleeve mounted therein, the latter receiving a stem with a thread and with a control valve, said stem being rollably mounted, and a thrust sleeve in which are mounted a flanged thrust rod and a working spring, one end of which bears on the flanges of the thrust rod and the other end of which bears on the thrust sleeve, wherein mounted between the control valve and the thrust rod is a ball bearing.

## Description

### Pertinent Art

The invention relates to the field of nuclear energy, particularly to water supply valves within the safety systems of nuclear power plants (hereinafter referred to as NPPs) and can be used in a corium catcher (hereinafter referred to as the CC) in case of severe accidents resulting in destruction of a reactor vessel and a containment.

Accidents with core meltdown that can take place in case of multiple failures of the core cooling systems pose the greatest radiation hazard.

In the course of such accidents a core melt - corium - escapes from a reactor vessel by melting it as well as the core structures, and afterheat remaining in it may break the integrity of an NPP containment - the last barrier in the routes for release of radioactive products to the environment.

In order to prevent this it is required to confine the core melt (corium) escaping from a reactor vessel and provide its continuous cooling until its complete crystallization. This function is performed by a corium catcher which is usually installed in a reactor shaft; the corium is directed to a CC vessel for the purpose of its distribution and subsequent cooling. Water supply valves (hereinafter referred to as the WSVs) are provided for ensured cooling of the corium in a CC vessel; they must be activated to supply a cooling medium (water) into a CC vessel in case of any critical temperature increase and remain open for sure during the entire corium cooling process.

### Prior art

An emergency single-acting thermal valve [1] comprising a cylindrical body with an inlet and outlet apertures made in its ends, the first and the second spring-controlled stems axially installed in the cylindrical body, having a damper with a clamp gasket attached to the end of the second stem for leak-tight closure of the inlet aperture, a fuse and a fixing device connecting the adjoining ends of the first and the second, wherein the fuse is located in a perforated sleeve which is installed on the outlet aperture wall of the cylinder body, and a piston with the possibility to enter into the perforated sleeve is installed on the free end of the first stem, and the fixing device consists of a cone installed on the end of the first stem with a split C-ring located on it in the open position, a thrust collar for the ring and a shell installed on the second stem, in this case the ring is installed in such a way so that it slides off the cone into the shell in the course of the first stem movement in order to ensure movement of the stems in one direction, is known.

Low reliability due to the following causes is a drawback of the thermal valve:
- absence of the damping mechanism for any mechanical distortion of the second hollow stem under the impact of the compressed spring when the second stem can be blocked and unable to perform any specified movement;
- absence of the damping mechanism for any thermal distortions of the second hollow stem in case of heating of the valve components on the outlet aperture side due to gas convection and thermal radiation from the corium mirror when the second stem can be blocked and unable to perform any specified movement;
- possibility of jamming in case of any distortion of the second hollow stem in the dynamic sleeve flange in relation to the dynamic sleeve under the impact of the spring in the areas of the shell and the second stem friction against the inner surface of the dynamic sleeve;
- possibility of sticking (welding) of the gasket to the flanges when the spring force under the increased temperature is obviously insufficient to open the valve;
- possibility of the spring slackening in case of long-term temperature increase as a result of convective heat transfer up to the state when the spring loses the specified compression force and is unable to perform the valve opening work.

### Disclosure of the invention

The technical result of the claimed invention refers to enhancement of the water supply valve reliability.

The task which the invention is intended to solve is to develop a water supply valve providing for ensured supply of cooling water, steam and water or steam and gas mixture under the impact of high temperatures.

The task, according to the invention, is solved by a water supply valve that comprises an actuating sleeve inserted into an intermediate sleeve and resting on the intermediate sleeve with its flanged stops, an actuating stem with a piston installed inside the actuating sleeve and the intermediate sleeve in such a way so that the piston of the actuating stem thrusts against a thermomechanical element which thrusts against a protective membrane fastened at the end of the actuating sleeve via a clamping mechanism, an actuating spring installed on the actuating stem in such a way so that one of its ends rests on the piston, and the other end - on the flanged stops of the actuating sleeve, a rolling stop installed on the end of the actuating stem projecting from the actuating sleeve, a flanged cylinder with a flanged sleeve inserted into it and having a rod-type sleeve installed in it where a rollably disposed threaded rod with a slide valve is located, a thrust sleeve with a flanged thrust stem and a working spring with one end resting of the thrust stem flanges, and the other end resting on the thrust sleeve, wherein a ball-type stop is installed between the slide valve and the thrust stem.

Essential features of the claimed invention include presence of an actuating sleeve, an intermediate sleeve, a flanged cylinder and a thrust sleeve. Wherein, an actuating mechanism made in the form of a stem with a piston passing through a flanged stop is installed in the actuating sleeve, a thermomechanical element is fastened on the piston by means of a clamping mechanisms equipped with a protective membrane, an actuating spring is installed on one end of the stem with its one end thrusting against the piston and the other end thrusting against the flanged stop, and a rolling stop is installed on the other end of the stem projecting from the flanged stop. A flanged sleeve is installed in the flanged cylinder, where a rod-type sleeve with a threaded rod screwed into it and equipped with a slide valve is installed. A thrust stem with flanges and a working spring with its one end resting on the thrust stem flanges and the other end resting on the thrust sleeve is installed in the thrust sleeve, in this case a ball-type stop is installed between the slide valve and the thrust stem.

This design of the water supply valve provides for its ensured activation due to presence of the following components:
- presence of the threaded rod screwed into the rod-type sleeve for formation of a playing gap in the thread connection and providing structural improvement of the damping mechanism for any mechanical distortions of the rod-type sleeve under the impact of the compressed working spring due to the playing gap;
- presence of a leaved flange in the actuating sleeve, leaved flanges in the intermediate sleeve, a leaved flange in the flanged sleeve that due to modification of the fastening mechanism provide structural improvement of the damping mechanism for any thermal distortions of the rod-type sleeve in case of heating of the outer surfaces of the protective membrane, the actuating sleeve, the intermediate sleeve and the flanged sleeve by gas convection and radiant heat fluxes from the corium mirror;
- presence of a large leaved flange providing for the flanged sleeve cooling due to cooling of convective gas streams through the side cylindrical wall of the flanged cylinder washed with water outside, with subsequent cooling of the intermediate sleeve due to backflow of the convective gas streams which in its turn prevents any jamming of the rod-type sleeve in the intermediate sleeve and in the flanged sleeve in the course of the rod-type sleeve movement under the impact of the working spring in the friction areas between the rod-type sleeve and the inner surfaces of the intermediate sleeve and the flanged sleeve;

- presence of a slide valve with sealing gaskets in the flanged cylinder cooled with water on the working spring side which prevents any sticking (welding) of the sealing gaskets to the flanged cylinder and the slide valve;
- presence of a water-cooled working spring preventing any slackening of the working spring in case of long-term temperature increase in the thermomechanical element, the actuating sleeve, the intermediate sleeve and the flanged sleeve due to gas convection and radiant heat fluxes from the corium mirror.

In addition, according to the invention, voids are made in the water supply valve piston providing for receipt of the molten thermomechanical element material and free movement of the actuating stem under the impact of the actuating spring.

In addition, according to the invention two and more balls or rolls may be used as a rolling stop in the water supply valve. Installation of two rolls or balls requires more accurate mechanical balancing of the valve, but is less dependent on stability of the geometrical characteristics of the actuating stem at increased temperatures. Installation of three rolls or balls does not require such accurate mechanical balancing of the valve, but is more dependent on stability of the geometrical characteristics of the actuating stem. Installation of more than three rolls or balls requires almost no mechanical balancing of the valve, but imposes more stringent requirements for stability of the geometrical characteristics of the actuating stem at increased temperatures.

In addition, according to the invention the clamping mechanism of the water supply valve consists of one or several flat plates installed crosswise or in parallel, or consists of one or several round plates with apertures, or is made in the form of a membrane with the convex side directed towards the thermomechanical element. Due to the fact that the piston under the impact of the actuating spring is constantly putting pressure on the thermomechanical element the support of the thermomechanical element shall be arranged in the way to maintain the geometrical dimensions and mechanical properties of the thermomechanical element for a long time. For this purpose, approximate equality of the pressure areas shall be ensured: the area of pressure onto the thermomechanical element on the piston side and the area of the thermomechanical element pressure onto the clamping mechanism. Several options of the clamping mechanism embodiment comply with these conditions: in the form of parallel or cross-shaped flat plates with spaces (gaps) between their parts intended for free flow of the thermomechanical element in case of its melting. Round plates with apertures perform the same function. A clamping mechanism made in the form of a membrane operates in a slightly different way: Its central convex section is pressed against the thermomechanical element, and the peripheral part is clamped in the fastener of the protective membrane forming a circular void for the thermomechanical element flow in case of its melting.

In addition, according to the invention, gaskets are installed in the water supply valve between the slide valve and the flanged cylinder.

In addition, according to the invention the actuating sleeve, the intermediate sleeve and the flanged sleeve of the water supply valve are connected with fasteners installed in the leaved flanges.

In addition, according to the invention the thrust sleeve of the water supply valve is connected to the flanged cylinder by means of fasteners installed in the cylindrical flanges.

In addition, according to the invention the flanged cylinder of the water supply valve is connected to the flanged sleeve by means of fasteners.

### Brief description of drawings

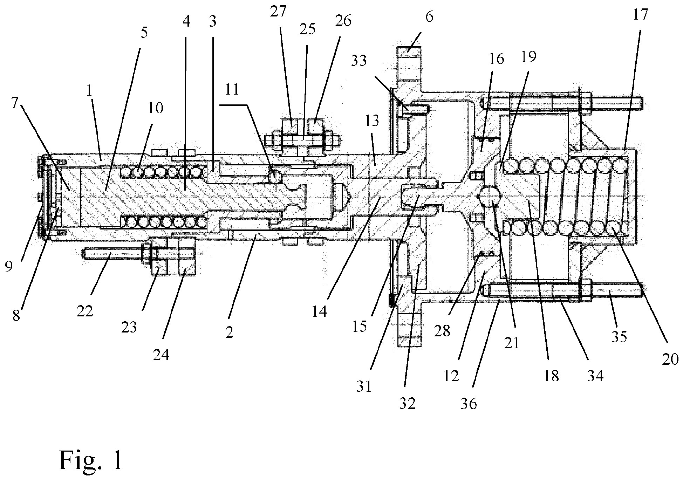

A water supply valve designed according to the claimed invention is presented in Fig. 1.

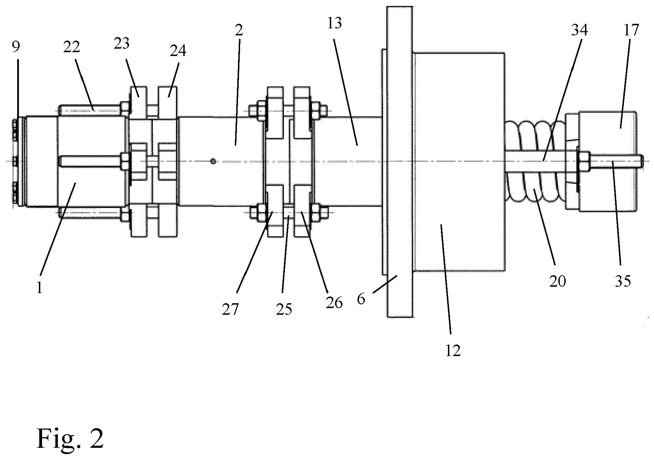

A water supply valve designed according to the claimed invention is presented in Fig. 2.

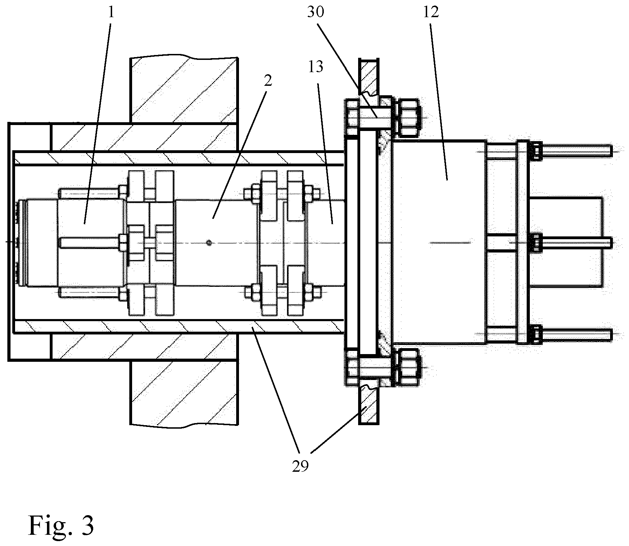

A water supply valve designed according to the claimed invention is presented in Fig. 3.

### Embodiments of the invention

As shown in Fig. 1, a water supply valve comprises an actuating sleeve (1) inserted into an intermediate sleeve (2) and resting on its flanged stop (3), comprising an actuating mechanism made in the form of a stem (4) with a piston (5) passing through the flanged stop (3), a thermomechanical element (7) is fastened to the piston (5) by means of a clamping mechanism (8) equipped with a protective membrane (9), an actuating spring (10) is installed on one end of the stem (4), with its one end thrusting against the piston (5) and the other end thrusting against the flanged stop (3), and a rolling stop (11) is installed on the other end of the stem (4) projecting from the flanged stop (3), with a rod-type sleeve (14) installed in a flanged sleeve (13) thrusting against it. A leaved flange (23) of the actuating sleeve (1) and a leaved flange (24) of the intermediate sleeve (2) are interconnected with fasteners (22). A leaved flange (27) of the intermediate sleeve (2) and a leaved flange (26) of the flanged sleeve (13) are interconnected with fasteners (25). A large leaved flange (32) of the flanged sleeve (13) is connected to the internal flange (31) of the flanged cylinder (12) with a fastener (33). A threaded rod (15) with a slide valve (16) is installed on the free end of the rod-type sleeve (14) projecting from the flanged sleeve (13). The slide valve (16) with sealing gaskets (28) is installed in the flanged cylinder (12), and the end flange (36) of the flanged cylinder (12) is connected to the thrust sleeve (17) via a leaved cylindrical flange (34) by means of fasteners (35). A working spring (20) is installed inside the thrust sleeve (17) with its one end resting on the thrust sleeve (17) and the other end resting on the flange (19) of the thrust stem (18), wherein a ball-type stop (21) is installed between the slide valve (16) and the stem (18).

As shown in Fig. 2 and 3, the water supply valve is installed in an external nozzle (29) with its round flange (6) of the flanged cylinder (12) and fixed with fasteners (30).

The claimed water supply valve operates in the following way.

In the cocked position under the standby mode the water supply valve components are in equilibrium under the impact of the actuating and working springs (10) and (20). Assembly of the water supply valve shall be performed in the following way: the flanged stop (3) is installed into the intermediate sleeve (2). The actuating spring (10) is sleeved on the actuating stem (4) with the piston (5), then the actuating stem (4) in assembly with the piston (5) and the actuating spring (10) is inserted into the flanged stop (3). The actuating sleeve (1) is installed on the leaved flange (24) of the intermediate sleeve (2) by means of the leaved flange (23) and fasteners (22), but the fasteners (22) are not tightened. The thermomechanical element (7) is installed inside the actuating sleeve (1) on the end of the piston (5) and fastened to the end of the actuating sleeve (1) via the clamping mechanism (8) and the protective membrane (9). After that the fasteners (22) are tightened, the actuating stem (4) projects from the flanged stop (3), and the actuating spring (10) is brought into the operating position with its one end resting on the flanged stop (3) and the other end - on the piston (5) of the actuating stem (4). The flanged stop (3) thrusts against the intermediate sleeve (2) under the impact of the actuating spring (10). The rolling stop (11) is installed on the actuating stem (4) projects from the flanged stop (3), and the rod-type sleeve (14) is put on it. The flanged sleeve (13) is put on the rod-type sleeve (14) and pressed against the leaved flanged (27) of the intermediate sleeve (2) by means of fasteners (25) of the leaved flanges (26) in the way to ensure fixation of the rolling stop (11) on the actuating stem (4) with a small gap providing for tightening of the leaved flanges (26), (27) of the intermediate and flanged sleeves (2) and (13) without any force action on the rod-type sleeve (14). The threaded rod (15) with the slide valve (16) is screwed into the rod-type sleeve (14) till opening of the thread connection between the threaded rod (15) and the rod-type sleeve (14) and appearance of a small gap between them. The sealing gaskets (28) and the flanged cylinder (12) are installed on the slide valve (16), and then the flanged cylinder (12) together with the slide valve (16) and the threaded rod (15) is turned around till alignment of the apertures in the large leaved flange (32) of the flanged sleeve (13) and the apertures in the internal flange (31) of the flanged cylinder (12) for installation of the fasteners (33). The ball-type stop (21) on which the thrust stem (18) is placed is installed on the slide valve (16) The working spring (20) on which the thrust sleeve (17) is placed is installed on the thrust stem (18). The leaved cylindrical flange (34) of the thrust sleeve (17) is pressed against the end flange (36) of the flanged cylinder (12) by means of fasteners (35) compressing the working spring (20) into the operating position. Thus, the working spring (20) with its one end resting on the thrust sleeve (17) is putting pressure on the ball-type stop (21) with the other end via the thrust stem (18), and the ball-type stop (21) transmits the effort of the working spring (20) via the slide valve (16) and the threaded rod (15) to the rod-type sleeve (14) which is putting pressure on the rolling stop (11). The rolling stop (11) is in the stationary state and transmits the main pressure of the working spring (20) to the flanged stop (3) and additional pressure to the actuating stem (4). The flanged stop (3) is fixed with the fasteners (22) of the leaved flanges (23), (24) of the actuating sleeve (1) and the intermediate sleeve (2) in order to prevent its displacement.

The water supply valve is installed in the external nozzle (29) by means of the fasteners (30) of the flange connection; for this purpose, the round flange (6) is made on the outer surface of the flanged cylinder (12) for leak-tight connection with the external nozzle (29). Besides, the round flange (6) of the flanged cylinder (12) is relieved from the action of the actuating and working springs (10) and (20), so no additional operations are required during installation of the water supply valve to the external nozzle (29) to bring it into the operating condition. Alignment of the water supply valve inside the external nozzle (29) is ensured by the leaved flanges (23) of the actuating sleeve (1), the leaved flanges (24) and (27) of the intermediate sleeve (2) and the leaved flanges (26) of the flanged sleeve (13) providing for maintenance of the flow passage between the water supply valve components and the inner surface of the external nozzle (29).

Heating of the thermomechanical element (7) by radiant heat fluxes results in its gradual melting. The molten material flows out of the clamping mechanism (8) which ensures immobility of the solid thermomechanical element (7) under the impact of two forces: the force of gravity and the piston (5) pressure force. The actuating spring (10) with the actuating stem (4) connected to the piston (5) inside it is putting pressure on the piston (5) with one of its ends. The other end of the actuating spring (10) is resting on the flanged stop (3) fixed between the actuating sleeve (1) and the intermediate sleeve (2). In the course of the thermomechanical element (7) melting the thickness of its solid part gradually decreases, and the actuating spring (10) expands and pushes the piston (5) and the actuating stem (4) connected with it which moves inside the flanged stop (3) continuously or with short stops displacing in relation to the stationary position of the rolling stop (11). The rolling stop (11) installed on the end of the actuating stem (4) slides off at the moment when the plane of the actuating stem (4) end crosses the centerline plane of the rolling stop (11).

After sliding of the rolling stop (11) off the actuating stem (4) into the rod-type sleeve (14) the balance of the rod-type sleeve (14) is disturbed. The working spring (20) is expanding and putting pressure on the thrust stem (18) which comes into motion and pushes the slide valve (16) via the ball-type stop (21). The slide valve (16) moves and projects from the flanged cylinder (12) pushing the rod-type sleeve (14) which moves between the outer surface of the flanged stop (3) and the inner surface of the intermediate sleeve (2) with the threaded rod (15). The travel of the rod-type sleeve (14) exceeds the travel of the slide valve (16) completely pushed out by the working spring (20) from the flanged cylinder (12) and pushed further till the end of the rod-type sleeve (14) travel or the slide valve (16) travel, in this case a gap is formed between the pushed-out slide valve (16) and the flanged cylinder (12) which provides for the medium flow in both directions (into the corium catcher vessel and outwards). The slide valve (16) pushed out of the flanged cylinder (12) is fixed on the flanged sleeve (13) surface with the working spring (20) and cannot change its position. The distance between the slide valve (16) and the flanged cylinder (12) provides the required flow passage for water, steam and water or steam and gas mixture in both directions from the thermomechanical element (7) side and from the slide valve (16) side.

Thus, the water supply valve structurally designed in accordance with the claimed invention allows to ensure supply of cooling water, steam and water or steam and gas mixture under the impact of high temperatures.

### Sources of information:

1. Russian Patent No. 2469233, IPC F16K 17/40, priority dated November 09, 2011.

## Claims

1. A water supply valve **characterized in that** it comprises an actuating sleeve inserted into an intermediate sleeve and resting on the intermediate sleeve with its flanged stops, an actuating stem with a piston installed inside the actuating sleeve and the intermediate sleeve in such a way so that the piston of the actuating stem thrusts against a thermomechanical element which thrusts against a protective membrane fastened at the end of the actuating sleeve via a clamping mechanism, an actuating spring installed on the actuating stem in the way that one of its ends rests on the piston, and the other end - on the flanged stops of the actuating sleeve, a rolling stop installed on the end of the actuating stem projecting from the actuating sleeve, a flanged cylinder with a flanged sleeve inserted into it and having a rod-type sleeve installed in it where a rollably disposed threaded rod with a slide valve is located, a thrust sleeve with a flanged thrust stem and a working spring with one end resting of the thrust stem flanges, and the other end resting on the thrust sleeve, in this case a ball-type stop is installed between the slide valve and the thrust stem.

2. The water supply valve according to Claim 1 **characterized in that** voids are made in the piston.

3. The water supply valve according to Claim 1 **characterized in that** two and more balls or rolls may be used as a rolling stop.

4. The water supply valve according to Claim 1 **characterized in that** the clamping mechanism consists of one or several flat plates installed crosswise or in parallel, or one or several round plates with apertures, or is designed in the form of a membrane with the convex side directed towards the thermomechanical element.

5. The water supply valve according to Claim 1 **characterized in that** gaskets are installed between the slide valve and the flanged cylinder.

6. The water supply valve according to Claim 1 **characterized in that** the actuating sleeve, the intermediate sleeve and the flanged sleeve are connected by means of fasteners installed in the leaved flanges.

7. The water supply valve according to Claim 1 **characterized in that** the thrust sleeve is connected to the flanged cylinder by means of fasteners installed in the cylindrical flanges.

8. The water supply valve according to Claim 1 **characterized in that** the flanged cylinder is connected to the flanged sleeve by means of fasteners.
